# EUROPÄISCHE PATENTANMELDUNG

(11) **EP 1 634 767 A2**
(43) Veröffentlichungstag der Anmeldung: **15.03.2006**
(21) Anmeldenummer: 05010609.5
(22) Anmeldetag: 17.05.2005
(51) Int. Cl.: B60P 7/08

(54) **Vorrichtung zur Ladungssicherung**

(30) Priorität: 18.05.2004 DE 102004024547
(71) Anmelder: CCS Hannover GmbH, 31319 Sehnde (DE)
(72) Erfinder: Birr, Michael, 31319 Sehnde (DE)
(74) Vertreter: Dörner, Lothar

(57) **Zusammenfassung**

Die Erfindung betrifft eine Vorrichtung zur Ladungssicherung in weitgehend geschlossenen Fahrzeugen, insbesondere in Transportern, weist mindestens ein vorzugsweise rechteckig ausgeführtes Netz (1) auf. Es sind mindestens zwei Anschlussschienen (3) vorgesehen, welche an den Fahrzeugwänden befestigbar sind. Das Netz (1) ist aus sich kreuzenden Riemen (11, 12) gebildet und mittels Spannriemen (2) zwischen den Anschlussschienen (3) spannbar. Jeweils ein Spannriemen (2) ist längs, quer und diagonal zur Netzfläche an dem Netz (1) angeordnet. Die Erfindung beinhaltet weiterhin ein Verfahren zur Ladungssicherung mittels eines Netzes (1), an dem Spannriemen (2) angeordnet sind, und Anschlussschienen (3). Die Anschlussschienen (3) werden an den Innenwänden (41) des Transporters befestigt. An diesen werden Anschlussklemmen (31) angeordnet. Das Netz (1) wird über der Ladung positioniert und die Spannriemen (2) werden lediglich mittels Körperkraft mit etwa 75 kg bis 100 kg Last gespannt und unter Spannung an den Anschlussklemmen (31) fixiert.

## Beschreibung

Die Erfindung betrifft eine Vorrichtung zur Ladungssicherung in weitgehend geschlossenen Fahrzeugen nach dem Oberbegriff des Patentanspruchs 1. Die Erfindung betrifft weiterhin ein Verfahren zur Ladungssicherung in weitgehend geschlossenen Fahrzeugen nach dem Oberbegriff der Patentansprüche 13 und 14.

Auf Ladeeinheiten, die sich in Kraftfahrzeugen befinden, wirken unterschiedlichste Kräfte durch Bewegungsänderungen des Fahrzeugs ein. Daher sind diese innerhalb des Fahrzeugs gegen die auftretenden Kräfte zu sichern. Die Ladungssicherung umfasst die Gesamtheit der Verfahren und Hilfsmittel zum sicheren Halten der Ladegüter auf der Ladefläche bzw. in Laderäumen während des Transports, damit es weder zu Personenschäden noch zu Beeinträchtigungen bzw. Schäden an Ladung, Fahrzeug oder Fahrweg infolge der Fahrbewegung kommt. Die Ladungssicherung hat den Zweck, das Rutschen und Kippen der Ladeeinheiten infolge horizontaler Beschleunigungskräfte sowie das Wandern und Drehen der Ladegüter infolge vertikaler Beschleunigungskräfte zu verhindern.

Bei der Ladungssicherung wird zwischen zwei Sicherungsmethoden unterschieden, der formschlüssigen und der kraftschlüssigen Sicherung. Eine formschlüssige Ladungssicherung liegt beispielsweise vor, wenn die Ladeeinheiten gegen Stirn und Bordwände abgestützt werden. Hierzu können auch - stabile - Begrenzungsgestelle eingesetzt werden. Eine kraftschlüssige Ladungssicherung wird durch Zurrmittel erzielt. Dabei gibt es verschiedene Methoden, die Ladung zu verzurren. Bei kleineren Ladeeinheiten, insbesondere beim Transport mittels Transportern, kommt das so genannte Niederzurren zum Einsatz. Das Grundprinzip beim Niederzurren besteht darin, den Anpressdruck der Ladung zu erhöhen. Im Zusammenhang mit der daraus erstehenden erhöhten Haftreibung kommt es zu einem Sicherungseffekt. Der erzeugte Anpressdruck ist insbesondere abhängig vom Verzurrwinkel sowie von der Verzurrspannung. Je steiler der Winkel und umso größer die Verzurrspannung, desto mehr effektive Kraft wird erzeugt.

Es ist aus der Praxis bekannt, Ladungen mit Hilfe von Netzen zu sichern, welche über die Ladung gezogen werden und mit Hilfe von Ratschen gespannt werden. Die Handhabung der zumeist engmaschigen Netze bei der Sicherung von Ladung erweist sich jedoch oftmals als nicht praktikabel, da das Netz zunächst an einem Ende über die Ladung zu legen ist und dann über die gesamte Länge der Ladung zu ziehen ist. Da der Laderaum in der Regel mit einer Vielzahl von Ladungsteilen beladen ist, ist diese Art der Ladungssicherung für den Benutzer - in der Regel den Fahrzeugführer oder den Frachtmeister - aus Praktikabililäts- und Zeitgründen nicht ausführbar. Weiterhin ist bekannt, (Abfall-)Container mittels Netzen, bestehend aus Seilen mit rundem Querschnitt, oder mittels PVC-Planen abzudecken und so gegen Verlieren von Ladungsteilen (bspw. Laub, Papier etc.) zu sichern.

Aus der DE 199 15 514 C1 ist ein Sicherungszurrnetz zum Sichern von Ladungen im Zuge ihres Transportes auf Ladeflächen von LKWs, Gütern- oder Zuganhängern bekannt, welches mit einem eine geschlossene Sicherungsfläche definierenden Netzwerk aus sich kreuzenden Maschengurten ausgerüstet ist. An einer Seite des Netzwerkes sind Festenden-Verbindungsgurte angeordnet, welche Befestigungsmittel besitzen. An der gegenüberliegenden Seite des Netzwerkes sind Losenden-Verbindungsgurte angeordnet, welche Spannvorrichtungen zur längenvariablen Festlegung des Netzwerkes an der Ladefläche aufweisen. Das so gestaltete Sicherungsnetz wird an vorhandene Zurrpunkte angeschlossen und mit Hilfe von Spannmitteln, insbesondere Ratschen verspannt. Auf diese Weise können insbesondere über die Ladungsfläche überstehende Ladungen wie Botonfertigteilrohre oder Papierrollen optimal gesichert werden. Insbesondere auch die hierfür erforderliche seitliche Sicherung ist somit in jedem Fall gewährleistet. Durch die hohen erzielbaren Zurrkräfte der Ratschen von 2 t bis 8 t und mehr je Zurrpunkt ist auch die erforderliche Sicherungskraft gewährleistet.

Das vorgenannte Sicherungszurrnetz erweist sich jedoch für die Ladungssicherung bei Transportern und leichten LKWs mit einem zulässigen Gesamtgewicht von etwa 2,8 t bis 7,5 t als ungeeignet. Bei handelsüblichen Transportern mit Hinterradantrieb liegt der Ladungsschwerpunkt etwa 80 cm vor der Hinterachse. Hierdurch ergibt sich ein trapezförmiges Ladungsbild, welches je nach Dimension und Gewicht der Ladeeinheiten variiert. Hinzu kommt, dass die Position der Zurrpunkte, abhängig von Hersteller und Typ des Fahrzeugs, stark variiert. Hierdurch kommt es zu Schwierigkeiten hinsichtlich einer optimalen Positionierung des Netzes. Darüber hinaus ist die Stabilität solcher Transporter begrenzt. Die Zurrpunkte sind jeweils maximal mit 75 kg bis 100 kg belastbar. Der Einsatz von Spannmitteln wie Ratschen oder ähnlichem birgt die Gefahr von Deformationen oder gar Beschädigungen des Fahrzeugs. Außerdem sind die typischerweise mittels Transportern zu bewegenden Ladeeinheiten für derartige Spannkräfte nicht ausgelegt. Hinzu kommt, dass durch die häufig am Fahrzeugboden angeordneten Zurrpunkte ein sehr steiler Spannwinkel besteht, wodurch der effektive Anpressdruck stark erhöht ist. Weiterhin bewirken die Maschengurte des Sicherungsnetzes aufgrund ihrer Abmessungen und der naturgemäßen Steifigkeit eine nur begrenzte Anpassungsfähigkeit des für Transporter typischen Ladebildes. Hierdurch wird eine ungünstige Lastbeaufschlagung auf die zu sichernden Ladungseinheiten hervorgerufen.

Hier will die Erfindung Abhilfe schaffen. Der Erfindung liegt die Aufgabe zugrunde, eine Vorrichtung zur Ladungssicherung zu schaffen, die bei unterschiedlichsten Ladungsabmessungen und -anordnungen auch bei kleinen Verzurrspannungen die erforderlichen Sicherungskräfte für eine optimale Sicherung der Ladung bewirkt und dabei für unterschiedliche Transporterausführungen einsetzbar ist. Gemäß der Erfindung wird diese Aufgabe dadurch gelöst, dass die Vorrichtung mindestens zwei Anschlussschienen aufweist, welche an den Fahrzeugwänden befestigbar sind, und das Netz aus sich kreuzenden Riemen gebildet und mittels Spannriemen zwischen den Anschlussschienen spannbar ist, wobei mindestens jeweils ein Spannriemen längs, quer und diagonal zur Netzfläche an dem Netz angeordnet ist.

Mit der Erfindung ist eine Vorrichtung zur Ladungssicherung in weitgehend geschlossenen Fahrzeugen, insbesondere Transportern, geschaffen, die bei unterschiedlichsten Ladungsabmessungen und -anordnungen auch bei kleinen Verzurrspannungen die erforderlichen Sicherungskräfte für eine optimale Sicherung der Ladung bewirkt und dabei für unterschiedliche Transporterausführungen einsetzbar ist. Die an Fahrzeugwänden befestigbaren Anschlussschienen ermöglichen die Ausstattung unterschiedlichster Fahrzeugausführungen mit Zurrpunklen in optimalen Positionen. Die sowohl zur Bildung des Netzes als auch zur Spannung des Netzes zum Einsatz kommenden Riemen zeichnen sich durch ihre naturgemäße Elastizität und Flexibilität aus, wodurch eine gute Anlage des Netzes an das Ladebild gewährleistet ist. Für die maximalen Zugkräfte von 75 kg bis 100 kg sind sie in jedem Falle ausreichend. Die Anordnung der Spannriemen längs, quer und diagonal zur Netzfläche gewährleistet eine optimale Kraftbeaufschlagung auch bei komplexen Ladebildern. Gegenüber Seilen mit rundem Querschnitt ist bei Riemen mit ihrem weitgehend rechteckigen Querschnitt ein "Rollen", wodurch ein ungewolltes Rutschen des Netzes verursacht werden kann, vermieden.

In Weiterbildung der Erfindung weisen die Anschlussschienen ein Längsraster auf, in dem Anschlussklemmen rastbar verschiebbar sind. Hierdurch sind die als Zurrpunkte dienenden Anschlussklemmen jeweils vor dem Hintergrund des zu sichernden Ladebildes flexibel und einfach positionierbar. Vorzugsweise sind die Anschlussschienen als Airlineschienen ausgeführt. Diese in der Luftfahrt bewährten Schienen zeichnen sich durch eine leichte und robuste Bauweise sowie eine einfache Handhabung aus.

In Ausgestaltung der Erfindung weisen die Spanngurte Klemmschnallen auf. Hierdurch ist eine kostengünstige und einfach zu handhabende Möglichkeit der Fixierung der gespannten Spannriemen an den Anschlussklemmen gegeben.

Vorteilhaft weisen die Spannriemen quer zur Spannrichtung verlaufende Profilstege auf. Hierdurch ist die Klemmwirkung der Klemmschnallen deutlich erhöht.

In Weiterbildung der Erfindung sind an den Spannriemen Haftelemente vorgesehen. Hierdurch sind die Enden der gespannten und an den Anschlussklemmen fixierten Spannriemen an der Fahrzeugwand bzw. -decke fixierbar, wodurch den Anforderungen der Unfallverhütungsvorschriften (UVV) Rechnung getragen wird. Vorzugsweise sind die Haftelemente als Klettelemente ausgeführt.

In einer anderen Ausgestaltung der Erfindung weisen die Spannriemen an ihrer der Anschlussschiene abgewandten Seite ein Anschlusselement auf, über das die Spannriemen am Netz über an diesem vorgesehene korrespondierende Anschlusselemente lösbar befestigbar sind. Hierdurch kann das Netz ohne Lösen der Spannriemen von der Anschlussschiene einfach und schnell entfernt werden. Weiterhin ist hierdurch das Verspannen des Netzes erleichtert.

Vorteilhaft ist an dem Spannriemen eine Zugverlängerung vorgesehen, an deren Ende ein Ring angeordnet ist. Hierdurch sind das Spannen der Spannriemen sowie das Anschließen des Netzes über die Anschlussteile erleichtert.

In Weiterbildung der Erfindung sind Haltevorrichtungen zur Aufnahme der Spannriemen vorgesehen, die an den Wänden des Laderaums befestigbar sind. Hierdurch sind nach dem Lösen der Spannriemen vom Netz deren Enden über den Ring der Zugverlängerung an den Haltevorrichtungen an der Fahrzeugwand fixierbar, wodurch den Anforderungen der Unfallverhütungsvorschriften (UVV) Rechnung getragen ist.

Bevorzugt sind die Haltevorrichtungen im Wesentlichen durch ein elastisches Band gebildet, an dem ein Haken angeordnet ist, in den der Ring der Zugverlängerung einhängbar ist. Über das elastische Band sind die Spannriemen derart an der Wand fixierbar, dass sie leicht unter Spannung stehen und so ein Herunterhängen der Spannriemen, was zur Bildung von Stolperfallen führen kann, vermieden ist.

Vorteilhaft ist der Haken an seiner dem Band zugewandten Seite als kegelförmig zulaufende Spirale ausgebildet, in der das Band fixierbar ist. Hierdurch ist der Ersatz eines defekten Bandes oder eines defekten Hakens auf einfache Weise ermöglicht.

Der Erfindung liegt weiterhin die Aufgabe zugrunde, ein Verfahren zur Ladungssicherung in weitgehend geschlossenen Fahrzeugen, insbesondere in Transportern, zu schaffen, das bei unterschiedlichsten Ladungsabmessungen und -anordnungen auch bei kleinsten Verzurrspannungen die erforderlichen Sicherungskräfte für eine optimale Sicherung der Ladung gewährleistet und dabei für unterschiedliche Transporterausführungen einsetzbar ist. Gemäß der Erfindung wird diese Aufgabe dadurch gelöst, dass die Anschlussschienen an den Innenwänden des Transporters befestigt werden, an diesen Anschlussklemmen angeordnet werden, das Netz über der Ladung positioniert wird und die Spannriemen lediglich mittels Körperkraft mit etwa 75 kg bis 100 kg Last gespannt und unter Spannung an den Anschlussklemmen fixiert werden. Gemäß der Erfindung wird diese Aufgabe weiterhin dadurch gelöst, dass die Anschlussschienen an den Innenwänden des Transporters befestigt werden, an den Anschlussschienen Anschlussklemmen angeordnet werden, an denen Spannriemen fixiert werden, das Netz über der Ladung positioniert wird, und die Spannriemen über die Ringe der Zugverlängerungen lediglich mit Körperkraft mittels etwa 75 kg bis 100 kg Last gespannt und unter Spannung über die Anschlusselemente an dem Netz fixiert werden.

Mit der Erfindung ist ein Verfahren zur Ladungssicherung in weitgehend geschlossenen Fahrzeugen, insbesondere in Transportern geschaffen, welches bei unterschiedlichsten Ladungsabmessungen und -anordnungen auch bei kleinen Verzurrspannungen die erforderlichen Sicherungskräfte für eine optimale Sicherung der Ladung gewährleistet und dabei für unterschiedliche Transpvrterausführungen einsetzbar ist.

Vorteilhaft wird mindestens eine Tür des Fahrzeugladeraums mit mindestens einer Anschlussschiene versehen und diese mittels eines Spannriemens des Netzes verzurrt. Hierdurch wird die Tür zusätzlich gesichert, sodass auch im Falle eines Unfalls einem Austreten der Ladung aus dem Laderaum entgegengewirkt ist.

Vorzugsweise werden die Enden der Spannriemen nach deren Fixierung an den Anschlussklemmen über Haftmittel an der Fahrzeugwand, -τür oder -decke fixiert. Hierdurch wird den Anforderungen der Unfallverhütungsvorschrift (UVV) Rechnung getragen.

In anderer Ausgestaltung der Erfindung werden nach dem Lösen der Spannriemen vom Netz deren Enden über den Ring an den Haltevorrichtungen eingehängt. Hierdurch werden die Spannriemen derart an der Wand fixiert, dass sie leicht unter Spannung stehen und so ein Herunterhängen der Spannriemen, was zur Bildung von Stolperfallen führen kann, vermieden ist. Dadurch wird den Anforderungen der Unfallverhütungsvorschrift (UVV) Rechnung getragen. Im Gegensatz zur Fixierung mittels Haftmitteln wie Klettbändern erweist sich diese Vorgehensweise als weniger Störanfällig, da die Haftkraft von Klettbändern aufgrund von Verschmutzung oder Abnutzung im Laufe der Zeit abnimmt.

Vorteilhaft wird die zu sichernde Ladung in dem Laderaum vor der Positionierung des Netzes derart angeordnet, dass die Lastverteilung zum Fahrzeugende hin ansteigt und die Hauptlast sich etwa auf Höhe der Hinterachse befindet. Hierdurch ist gewährleistet, dass die maximal zulässige Achslast der Vorderachse nicht überschritten wird. Die maximale zusätzliche Ladelast dieser Achse ist durch das Gewicht von Motor und Getriebe bereits sehr reduziert. Weiterhin optimiert eine solche Lastverteilung die Fahrzeugdynamik, wodurch die Fahrzeugkontrolle durch den Fahrzeugführer optimiert wird.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: den Laderaum eines Transporters mit installierter Vorrichtung zur Ladungssicherung in der Draufsicht;
- Fig. 2: die Seitenansicht des in Figur 1 dargestellten Laderaums;
- Fig. 3: die Darstellung einer Anschlussschiene in der Draufsicht und
- Fig, 4: die Detailansicht eines Spannriemens mit Zugvorrichtung sowie eine Haltevorrichtung für den Spannriemen.

Die als Ausführungsbeispiel gewählte Vorrichtung zur Ladungssicherung besteht im Wesentlichen aus einem Netz 1, an dem Spannriemen 2 angeordnet sind, welche an Anschlussleisten 3 fixierbar sind. Das Netz 1 ist aus quer angeordneten Riemen 11 und längs angeordneten Riemen 1 2 gebildet, welche im Ausführungsbeispiel jeweils im rechten Winkel zueinander sich kreuzend derart angeordnet sind, dass quadratische Maschen 13 gebildet sind. Die Riemen 11, 12 sind an den Kreuzungspunkten jeweils durch Nähte verbunden. Alternativ ist beispielsweise auch eine Verbindung mittels Nieten oder Verkleben denkbar.

An den äußeren Riemen 11, 12 des Netzes 1 sind Spannriemen 2 angeordnet. Diese sind im Ausführungsbeispiel jeweils an Kreuzungspunkten des Netzes 1 mit diesen vernäht. Eine Verbindung mittels Nieten oder Verkleben ist gleichfalls möglich. In anderer Ausgestaltung ist eine lösbare Verbindung der Spannriemen 2 mit dem Netz 1 über Anschlusselemente 21 möglich.

Das freie Ende der Spannriemen 2 ist über Anschlussklemmen 31 mit einer Anschlussschiene 3 verbunden. Hierzu ist der Spannriemen 2 schlaufenartig um eine Walze 311 der Anschlussklemme 31 geführt, wobei die so gebildete Schlaufe mit Hilfe einer - nicht dargestellten - Klemmschnalle gegen unbeabsichtigtes Lösen gesichert ist. Die Anschlussklemme 31 ist in einer Mulde 32 der Anschlussschiene 3 eingerastet. Die Position der Anschlussklemme 31 in einer Anschlussschiene 3 ist in dem Muldenraster beliebig veränderbar. Im Falle der Nutzung von werkseitig vorgesehenen Verzurrleisten kommen als Anschlussklemmen 31 vorzugsweise sog. Triangeln zum Einsatz.

Die Anschlussschienen 3 sind mittels Nieten 33 an der Wand 41 eines Laderaums 4 horizontal in teilweise unterschiedlichen Höhen befestigt. Alternativ ist auch eine vertikale Anordnung von Anschlussschienen denkbar. In diesem Fall sind die Anschlussklemmen 31 vertikal im Raster der Anschlussstelle 3 variabel positionierbar. Im Ausführungsbeispiel sind sowohl die Hecktür 42 als auch die Seitentür 43 des Laderaums 4 mit einer Anschlussschiene 3 versehen. Mit Hilfe dieser Anschlussschienen 3 wird nicht nur das Netz 1 gespannt, sondern es werden gleichzeitig auch die Türen 42, 43 vor unbeabsichtigtem Öffnen, beispielsweise im Falle eines Unfalls, von innen gesichert.

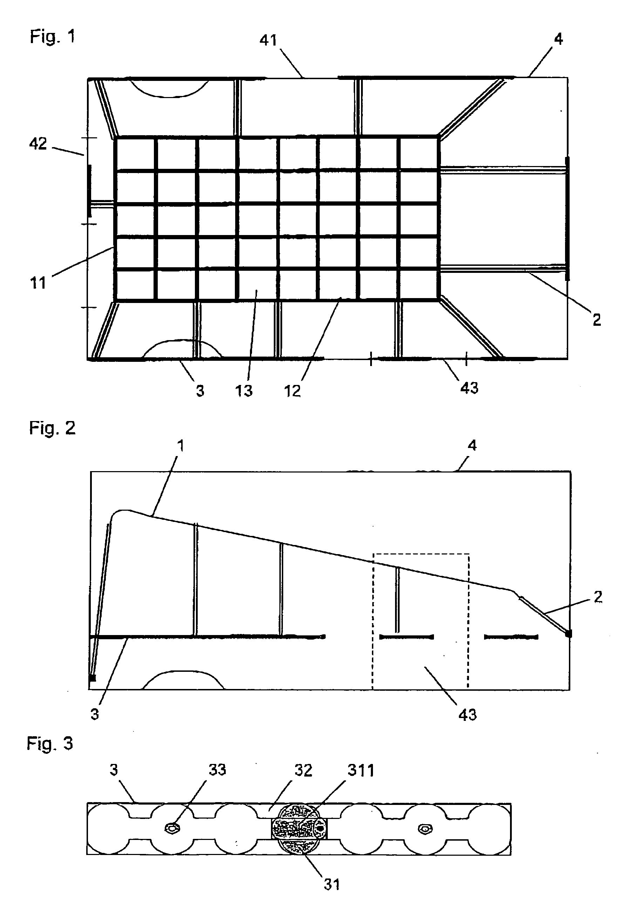

In Figur 2 ist ein optimales Ladungsbild eines Transporters dargestellt. Um den Anforderungen der Ladungssicherung derart angeordneter Ladeeinheiten zu genügen, wurden die Anschlussschienen im Heckbereich des Transporters tief angeordnet. Dieses führt zu einem steilen Verzurrwinkel, wodurch die erforderliche effektive Kraft in diesem Bereich bewirkt wird. An der der Hecktür 42 gegenüberliegenden Seite des Laderaums 4 wurden die Anschlussschienen höher montiert, wodurch der Verzurrwinkel flacher ausfällt. Dadurch wird an dieser Stelle eine geringere effektive Kraft erzeugt. Basierend auf dieser Anordnung der Anschlussschienen 3 ist also vor dem Hintergrund des jeweiligen Ladebildes eine entsprechende Verteilung der Sicherungskraft bzw. des Anpressdrucks der Ladung erzielbar. Die Verteilung des Anpressdrucks ist gemäß Ausführungsbeispiel nach Figur 2 in etwa proportional zur Verteilung der Ladung auf der Ladefläche.

Bei Fahrten ohne Ladung wird das Netz 1 vorteilhaft in einem vorhandenen oder nachträglich zu montierenden - nicht dargestellten - Staufach (i.d.R. über dem Fahrersitz) verstaut. Dadurch ist der Laderaum frei von Spannriemen oder sonstigen Netzbestandteilen, wodurch wiederum den Anforderungen der Unfallverhütungsvorschrift (UVV) Rechnung getragen wird.

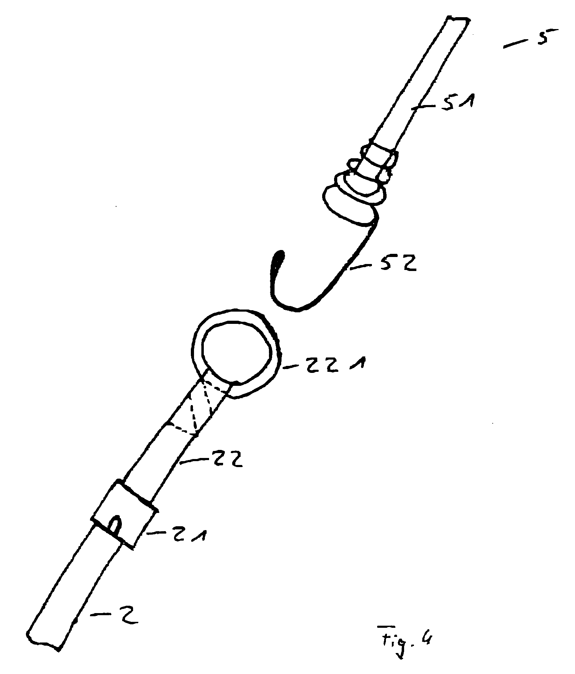

In einer alternativen Ausführungsform sind die Spannriemen 2 mit dem Netz 1 über Anschlusselemente 21 - die in Figur 4 lediglich andeutungsweise dargestellt sind - lösbar verbunden. An den Spannriemen 2 ist eine Zugverlängerung 22 vorgesehen, an deren Ende ein Ring 221 angenäht ist. An der Wand des Laderaums 4 sind Haltevorrichtungen 5 befestigt, welche der Aufnahme der Spannriemen 2 dienen. Die Haltevorrichtungen 5 sind im Wesentlichen durch ein elastisches Band 51 gebildet, an dem ein Haken 52 angeordnet ist. Der Haken 52 ist auf seiner dem Band 51 zugewandten Seite als kegelförmig zulaufende Spirale ausgebildet. Das Band 51 ist an seinem dem Haken 51 zugewandten Ende zur Durchrutschsicherung verdickt ausgeführt. Dieses verdickte Ende ist innerhalb der kegelförmig zulaufenden Spirale des Hakens 51 angeordnet. Nach Entfernung des Netzes 1 werden die freien Enden der weiterhin in der Anschlussschiene 3 fixierten Spannriemen 2 mit den Ringen 221 der Zugverlängerung 22 in die Haken 51 der Haltevorrichtungen 5 eingehängt. Dabei ist die Länge des elastischen Bandes 51 so gewählt, dass dieses nach Einhängen des Spannriemens 2 gespannt ist. Dadurch liegt der Spannriemen glatt an der Wand des Laderaums 4 an.

## Patentansprüche

1. Vorrichtung zur Ladungssicherung in weitgehend geschlossenen Fahrzeugen, insbesondere in Transportern, mit mindestens einem, vorzugsweise rechteckig ausgeführtem Netz, **dadurch gekennzeichnet, dass** mindestens zwei Anschlussschienen (3) vorgesehen sind, welche an den Fahrzeugwänden befestigbar sind, und das Netz (1) aus sich kreuzenden Riemen (11, 12) gebildet und mittels Spannriemen (2) zwischen den Anschlusschienen (3) spannbar ist, wobei mindestens jeweils ein Spannriemen (2) längs, quer und diagonal zur Netzfläche an dem Netz (1) angeordnet ist.

2. Vorrichtung nach Anspruch 1, **dadurch gekennzeichnet, dass** die Anschlussschienen (3) ein Längsraster aufweisen, in dem Anschlussklemmen (31) rastbar verschiebbar sind.

3. Vorrichtung nach Anspruch 1 oder 2, **dadurch gekennzeichnet, dass** die Anschlussschienen (3) Airlineschienen sind.

4. Vorrichtung nach einem der Ansprüche 1 bis 3, **dadurch gekennzeichnet, dass** die Spannriemen (2) Klemmschnallen aufweisen.

5. Vorrichtung nach einem der Ansprüche 1 bis 4, **dadurch gekennzeichnet, dass** die Spannriemen (2) quer zur Spannrichtung verlaufende Profilstege aufweisen.

6. Vorrichtung nach einem der Ansprüche 1 bis 5, **dadurch gekennzeichnet, dass** an den Spannriemen (2) Haftelemente vorgesehen sind.

7. Vorrichtung nach Anspruch 6, **dadurch gekennzeichnet, dass** die Haftelemente Klettelemente sind.

8. Vorrichtung nach einem der Ansprüche 1 bis 5, **dadurch gekennzeichnet, dass** die Spannriemen (2) an ihrer der Anschlussschiene (3) abgewandten Seite ein Anschlusselement (21) aufweisen, über das die Spannriemen (2) am Netz (1) über an diesem vorgesehene korrespondierende Anschlusselemenie lösbar befestigbar sind.

9. Vorrichtung nach Anspruch 8, **dadurch gekennzeichnet, dass** an dem Spannriemen (2) eine Zugverlängerung (22) vorgesehen ist, an deren Ende ein Ring (211) angeordnet ist.

10. Vorrichtung nach Anspruch 9, **dadurch gekennzeichnet, dass** Haltevorrichtungen (5) zur Aufnahme der Spannriemen (2) vorgesehen sind, die an den Wänden des Laderaums (4) befestigbar sind.

11. Vorrichtung nach Anspruch 10, **dadurch gekennzeichnet, dass** die Haltevorrichtungen (5) im Wesentlichen durch ein elastisches Band (51) gebildet sind, an dem ein Haken (52) angeordnet ist, in den der Ring (211) der Zugverlängerung (22) einhängbar ist.

12. Vorrichtung nach Anspruch 11, **dadurch gekennzeichnet, dass** der Haken (52) an seiner dem Band (51) zugewandten Seite als kegelförmig zulaufende Spirale ausgebildet ist, in der das Band (51 ) fixierbar ist.

13. Verfahren zur Ladungssicherung in weitgehend geschlossenen Fahrzeugen, insbesondere in Transportern, mittels eines Netzes (1), an dem Spannriemen (2) angeordnet sind, und Anschlussschienen (3), wobei die Anschlussschienen (3) an den Innenwänden des Transporters befestigt werden, an diesen Anschlussklemmen (31) angeordnet werden, das Netz (1) über der Ladung positioniert wird, und die Spannriemen (2) lediglich mit Körperkraft mittels etwa 75 kg bis 100 kg Last gespannt und unter Spannung an den Anschlussklemmen (31) fixiert werden.

14. Verfahren zur Ladungssicherung in weitgehend geschlossenen Fahrzeugen, insbesondere in Transportern, mittels eines Netzes (1), an dem Spannriemen (2) über Anschlussteile (21) lösbar angeordnet sind, und Anschlussschienen (3), wobei die Anschlussschienen (3) an den Innenwänden des Transporters befestigt werden, an den Anschlussschienen (3) Anschlussklemmen (31) angeordnet werden, an denen Spannriemen (2) fixiert werden, das Netz (1) über der Ladung positioniert wird, und die Spannriemen (2) über die Ringe (211) der Zugverlängerungen (22) lediglich mit Körperkraft mittels etwa 75 kg bis 100 kg Last gespannt und unter Spannung über die Anschlusselemente (21) an dem Netz (1) fixiert werden.

15. Verfahren nach Anspruch 13 oder 14, **dadurch gekennzeichnet, dass** mindestens eine Tür (42, 43) des Fahrzeugladeraums (4) mit mindestens einer Anschlussschiene (3) versehen wird und diese mittels eines Spannriemens (2) des Netzwerkes (1) verzurrt wird.

16. Verfahren nach einem der Ansprüche 13 bis 15, **dadurch gekennzeichnet, dass** die Enden der Spannriemen (2) nach deren Fixierung an den Anschlussklemmen (31) über Haftmittel an der Fahrzeugwand, -tür oder -decke fixiert werden.

17. Verfahren nach einem der Ansprüche 13 bis 15, **dadurch gekennzeichnet, dass** nach dem Lösen der Spannriemen (2) vom Netz (1) deren Enden über den Ring (211) an den Haltevorrichtungen (5) eingehängt werden.

18. Verfahren nach einem der Ansprüche 13 bis 17, **dadurch gekennzeichnet, dass** die zu sichernde Ladung in dem Laderaum (4) vor der Positionierung des Netzes (1) derart angeordnet wird, dass die Lastverteilung zum Fahrzeugende hin ansteigt und die Hauptlast sich etwa auf Höhe der Hinterachse befindet.
